(19) 

**Europäisches Patentamt**

**European Patent Office**

**Office européen des brevets**

(11) **EP 1 837 765 A2**

(12) **EUROPEAN PATENT APPLICATION**

(43) Date of publication:
**26.09.2007 Bulletin 2007/39**

(51) Int Cl.:
*G06F 11/14* (2006.01)

(21) Application number: **06253335.1**

(22) Date of filing: **27.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.02.2006 JP 2006036372**

(71) Applicant: **Hitachi, Ltd.**
**Tokyo (JP)**

(72) Inventors:
• **Otani, Toshio**
  **Tokyo 100-8220 (JP)**
• **Ikezawa, Mitsuru**
  **Tokyo 100-8220 (JP)**

(74) Representative: **Hodsdon, Stephen James et al**
**Mewburn Ellis LLP**
**York House**
**23 Kingsway**
**London WC2B 6HP (GB)**

(54) **Backup apparatus and backup method**

(57) There is proposed a backup apparatus and a backup method capable of improving the cost performance of a storage apparatus. A backup volume (BVOL) having a capacity corresponding to at least the summation of the capacities of online volumes (VOL) is created. The storage area of the created backup volume is divided into at least the same number of partitions (70A - 70n) as the online volumes. Backup data for each of the online volumes is stored in a corresponding one of the partitions.

**FIG.1**

**Description**

This application relates to and claims priority from Japanese Patent Application No. 2006-036372, filed on February 14, 2006, the entire disclosure of which is incorporated herein by reference.

The present invention relates to a backup apparatus and a backup method, and it is suited for use in a storage apparatus, for example.

In conventional storage systems, it has been commonly performed to hold backup data at a certain point of time, for an online volume used by a user in a backup volume, and, when a failure occurs in the online volume, use the backup data held in the backup volume to restore the online volume to the condition before the failure occurs.

To back up data stored in an online volume in such a storage system, there have been proposed various methods, such as holding data image in an online volume at a certain point of time as it is, and holding only differences from data image in an online volume at a certain point of time.

JP-A-2004-192133 discloses a method for generating a copy volume in which a copy (backup) of a master logical volume can be instantaneously generated.

In a storage system, it is usually necessary to improve the cost performance by creating and containing volumes for more users in one storage apparatus.

However, when data image in an online volume at a certain point of time is held as it is in order to back up data, the same number of backup volumes as the online volumes are required, so that the number of volumes required for one user is at least as twice as the number of online volumes. As a result, in a prior-art storage system employing the backup method, there is a problem that the number of users which can be allocated to one storage apparatus is limited to half the number of volumes which can be created in the storage apparatus.

When it is required to back up data images in an online volume, at multiple points of time, this problem is more significant. In such a case, the number of volumes which can be allocated to users is reduced to less than half the number of volumes which can be created in the storage apparatus.

In a host apparatus used by a user, it is common to perform restoration for each file or each directory when file breakage or operation error occurs. In a storage apparatus in such a storage system, however, restoration is limited to being performed for each volume, and there is a problem that restoration cannot be performed for each file.

The present invention has been made in consideration of the above point and is intended to propose a backup apparatus and a backup method capable of improving the cost performance of a storage apparatus.

In order to preferably solve the problem, in an aspect of the present invention, a backup apparatus for backing up each of data in one or more online volumes to be backed up which have been created in a storage apparatus is provided with: a control unit for creating a backup volume having a capacity corresponding to at least the summation of the capacities of the online volumes, dividing the storage area of the created backup volume into at least the same number of partitions as the online volumes, and storing backup data for each of the online volumes in a corresponding one of the partitions.

As a result, according to this backup apparatus, it is possible to back up respective online volumes using fewer backup volumes than the online volumes, and it is also possible to allocate all additional volumes creatable in a storage apparatus to online volumes.

Furthermore, in another aspect of the present invention, a backup method for backing up each of data in one or more online volumes to be backed up which have been created in a storage apparatus is provided with: a first step of creating a backup volume having a capacity corresponding to at least the summation of the capacities of the online volumes, and dividing the storage area of the created backup volume into at least the same number partitions as the online volumes; and a second step of storing backup data for each of the online volumes in a corresponding one of the partitions.

As a result, according to this backup method, it is possible to back up respective online volumes using fewer backup volumes than the online volumes, and it is also possible to allocate all additional volumes creatable in a storage apparatus to online volumes.

According to aspects of the present invention, most of volumes creatable in a storage apparatus can be allocated to online volumes, so that it is possible to improve the cost performance of the storage apparatus.

BRIEF DESCRIPTION OF THE DRAWINGS

FIG. 1 is a block diagram showing the entire configuration of a storage system according to an embodiment of the present invention;
FIG. 2 is a block diagram showing the configuration of a host apparatus;
FIG. 3 is a block diagram showing the configuration of a management server;
FIG. 4 is a block diagram showing the configuration of a storage apparatus;
FIG. 5 is a conceptual diagram showing a volume allocation management table;
FIG. 6 is a conceptual diagram showing an iSCSI session management table;
FIG. 7 is a conceptual diagram provided for description of sizing information according to the first embodiment of the present invention;
FIG. 8 is a conceptual diagram showing a backup management table;
FIG. 9 is a flowchart showing a first preconfiguration procedure;

FIG. 10 is a conceptual diagram showing the folder configuration in a backup volume;

FIG. 11 is a flowchart showing a first backup procedure;

FIG. 12 is a conceptual diagram provided for description of update of the backup management table performed by the backup processing;

FIG. 13 is a conceptual diagram provided for description of NAS access to backup data in a storage system according to the first embodiment;

FIG. 14 is a conceptual diagram provided for description of sizing information according to a second embodiment of the present invention;

FIG. 15 is a flowchart showing a second preconfiguration procedure;

FIG. 16 is a conceptual diagram provided for description of NAS access to backup data in a storage system according to the second embodiment;

FIG. 17 is a flowchart showing a second backup procedure;

FIG. 18 is a conceptual diagram provided for description of update of the backup management table performed by the backup processing; and

FIG. 19 is a conceptual diagram provided for description of a volume allocation management table according to another embodiment of the present invention.

Embodiments of the present invention will be described below in detail with reference to drawings.

(1) First embodiment

(1-1) Configuration of a storage system according to an embodiment

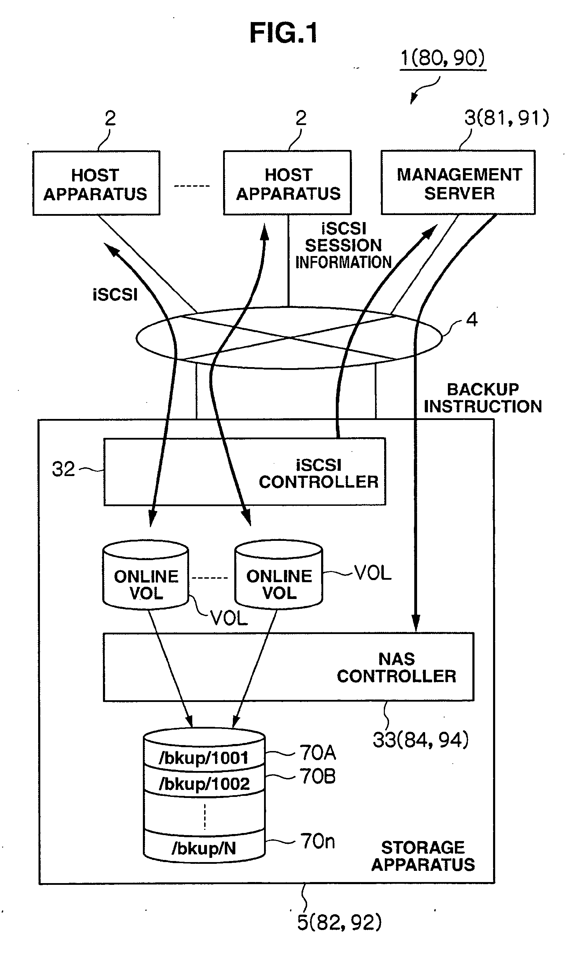

In FIG. 1, reference numeral 1 represents an entire storage system according to this embodiment. The storage system 1 is composed of multiple host apparatuses 2 and at least one management server 3 connected to a storage apparatus 5 via a network 4.

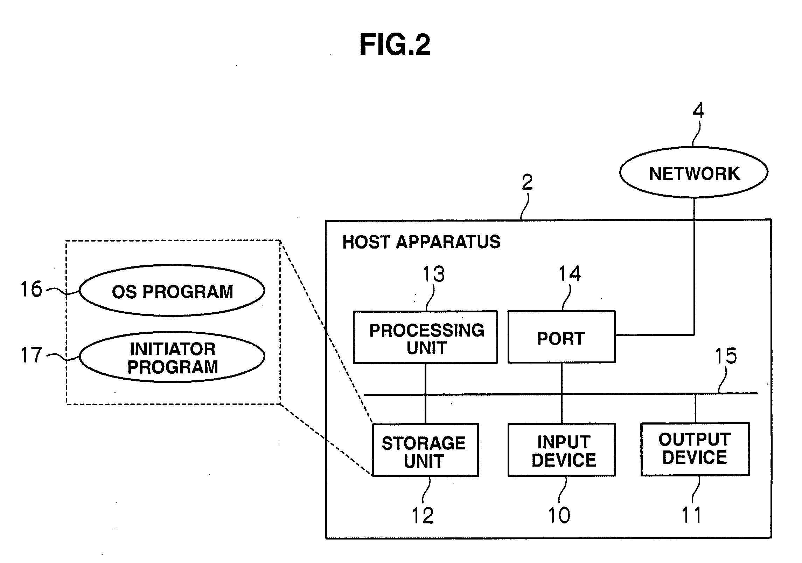

The host apparatus 2 is a computer apparatus composed, for example, of a personal computer, a workstation or a mainframe, and it is composed of an input device 10, an output device 11, a storage unit 12, a processing unit 13 and a port 14 connected via a bus 15, as shown in FIG. 2.

The input device 10 is a device for a user to input various instructions, and it is composed, for example, of a mouse, a keyboard, a switch, a pointing device, a microphone and the like. The output device 11 is a device for a host apparatus to present various information to a user, and it is composed, for example, of a monitor display and a speaker.

The storage unit 12 is composed of a hard disk device, a memory and the like. In this storage unit 12, there are stored various control programs and various control data, such as an OS (operating system) program 16 and an initiator program 17 for the host apparatus 2 to access the storage apparatus 5 via the network 4.

The processing unit 13 is composed of a processor unit such as a CPU (central processing unit), and it executes relevant processing based on the various control programs and various control data stored in the storage unit 12 and an instruction input via the input device 10, and presents the processing result to a user via the output device 11 as necessary.

The port 14 is connected to the network 4 via a predetermined cable. The port 14 is given a WWN (World Wide Name) or a network address such as an IP (Internet protocol) address for uniquely identifying the host apparatus 2 on the network 4.

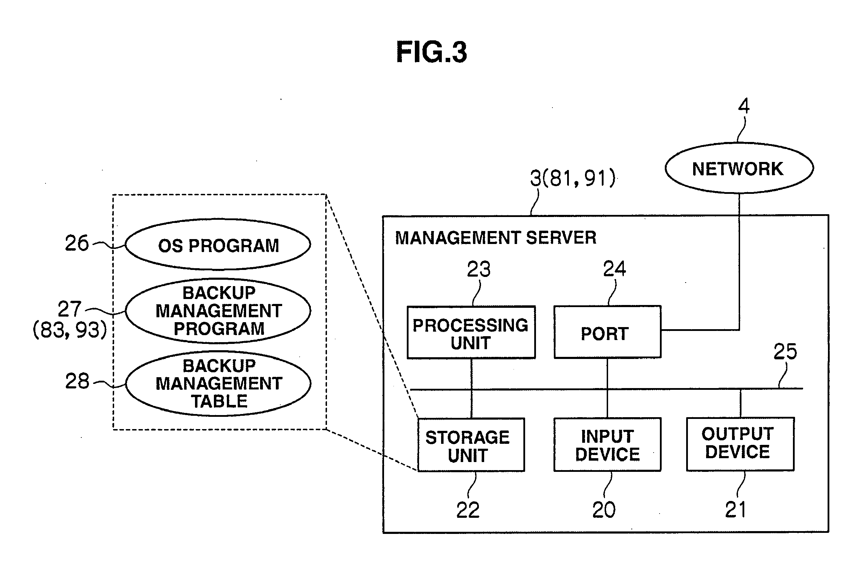

The management server 3 is a personal computer apparatus used by an administrator to manage the storage apparatus 5, and it is composed of an input device 20, an output device 21, a storage unit 22, a processing unit 23 and a port 24 connected via a bus 25, as shown in FIG. 3.

Description of the input device 20, the output device 21, the processing unit 23 and the port 24 will be omitted because each of them has the same function as a corresponding member of the host apparatus 2. In the storage unit 22, there are stored various control programs and various control data, such as an OS program 26, a backup management program 27 to be described later and a backup management table 28, as shown in FIG. 3.

The network 4 is composed of an IP-SAN, a LAN, the Internet, a public line, a dedicated line or the like. The host apparatus 2 and the storage apparatus 5 communicate via this network 4 in accordance with FCP (Fibre Channel Protocol) if the network 4 is FC (Fiber Channel), and in accordance with iSCSI (Internet SCSI) if the network 4 is IP, such as an IP-SAN, a LAN and the Internet. In the examples, description will be made on embodiments in accordance with the iSCSI.

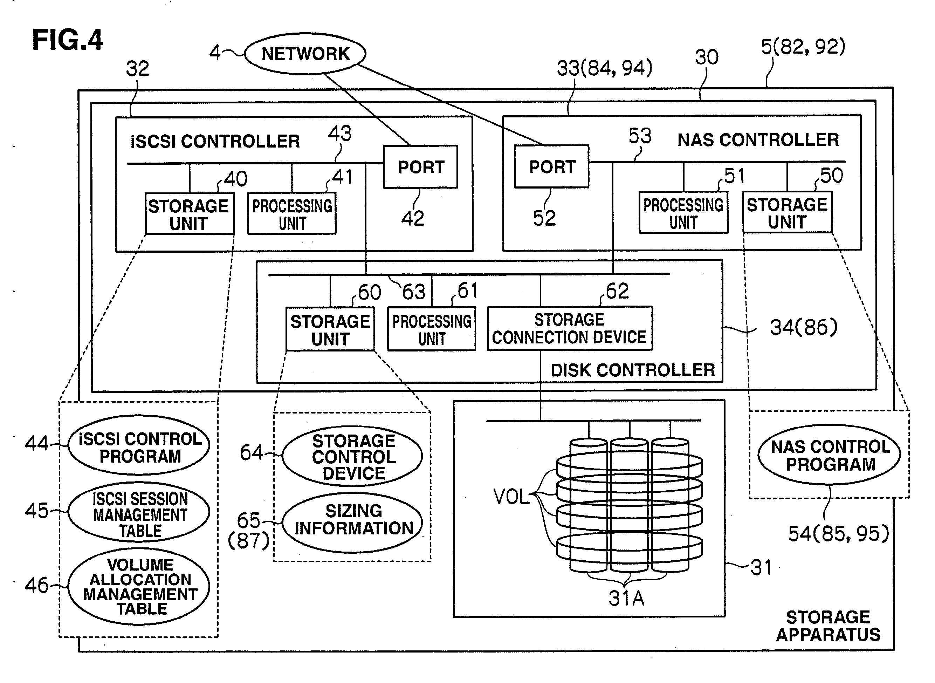

The storage apparatus is composed of a storage controller 30 and a disk storage device 31 as shown in FIG. 4. The storage controller 30 is composed of an iSCSI controller 32, an NAS (network attached storage) controller 33 and a disk controller 34.

The iSCSI controller 32 is a controller for controlling sending/receiving of data to/from the host apparatus 2 in accordance with the iSCSI protocol, and it is composed of a storage unit 40, a processing unit 41 and a port 42 connected via a bus 43.

In the storage unit 40, there are stored various control programs and various control data including an iSCSI control program 44 to be described later, an iSCSI session management table 45 and a volume allocation management table 46. The processing unit 41 is composed, for example, of a CPU, and it executes necessary control processing based on the control programs and control data stored in the storage unit 40 and various commands given by the host apparatus 2 or the management server 3. The port 42 is given an address for uniquely identifying the port 42 on the network 4.

The NAS controller 33 is a controller for controlling the NAS function of the storage apparatus 5, and it is composed of a storage unit 50, a processing unit 51 and a port 52 connected via a bus 53.

In the storage unit 50, there are stored various control programs and various control data including an NAS control program 54. The processing unit 51 is composed, for example, of a CPU, and it executes necessary control processing based on the control programs and control data stored in the storage unit 50 and various commands given by the host apparatus 2 or the management server 3. The port 52 is given an address for uniquely identifying the port 52 on the network 4.

The disk controller 34 is composed of a storage unit 60, a processing unit 61 and a storage connection device 62 connected via a bus 63.

In the storage unit 60, there are stored various control programs and various control data including a storage control program 64 and sizing information 65. The processing unit 61 is composed, for example, of a CPU, and it executes necessary control processing based on the control programs and control data stored in the storage unit 60 and various commands given by the host apparatus 2 or the management server 3. The storage connection device 62 is an interface used for communication with the disk storage device 31, and it sends and receives data to be read or written or various commands to and from the disk storage device 31.

The disk storage device 31 is composed of multiple expensive disk devices 31A, such as SCSI disks, or multiple inexpensive disk devices 31A, such as SATA (Serial AT Attachment) disks and optical disks, included therein. In this embodiment, such disk devices may exist alongside each other, or only disk devices 31 of any one kind may be contained in the disk storage device 31.

These disk devices 31A are operated by the disk controller 34 according to a RAID method. On a physical storage area provided by one or more disk devices 31A, one or more logical volumes VOL are defined. Data is stored in the volumes VOL as blocks (hereinafter referred to as logical blocks) with a predetermined size.

Each volume VOL is given a unique identifier (hereinafter referred to as an LUN (logical unit number). In this embodiment, input and output of data is performed by specifying an address, which is combination of this LUN and a number which is given to each logical block and is unique to the logical block (hereinafter referred to as an LBA (logical block address) .

(1-2) Backup function in this embodiment

Next, description will be made on a backup function employed in the storage system 1 of this embodiment.

The following is one of the characteristics of the storage system 1 of this embodiment: one backup volume BVOL with a capacity corresponding to the summation of capacities of volumes (hereinafter referred to as online volumes as appropriate) VOL for a user to write and read data to and from is created, in the storage apparatus 5 (FIG. 1); the backup volume BVOL is divided into the same number of partitions as the online volumes VOL (specifically, the same number subfolders 70A to 70n as the online volumes VOL is created in the backup volume BVOL); and each of backup data for different online volumes VOL is stored in each of the subfolders 70A to 70n.

In this case, writing and reading of the backup data for each online volume VOL, to and from the backup volume BVOL can be performed with the use of the NAS function (file system function) of the storage apparatus 5, in this storage system 1. Thereby, when a failure occurs in an online volume VOL, restoration of the online volume VOL can be performed for each file or each folder with the use of the backup data stored in the backup volume BVOL.

In order to describe the backup function, a method for managing the online volumes VOL in the storage apparatus 5 will be described first.

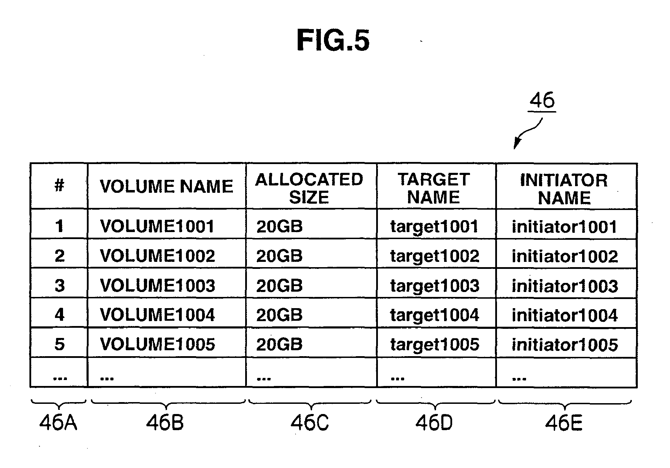

FIG. 5 shows the configuration of the above-described volume allocation management table 46 stored in the storage unit 40 of the iSCSI controller 32 of the storage apparatus 5. Every time an online volume VOL created in the storage apparatus 5 is allocated to any host apparatus 2, the processing unit 61 of the iSCSI controller 32 registers necessary information about the online volume VOL with the volume allocation management table 46. The processing unit 41 uses this volume allocation management table 46 to manage which online volume VOL is allocated to which host apparatus 2.

Actually, the volume allocation management table 46 is composed of an "entry number (#)" field 46A, a "volume name" field 46B, an "allocated size" field 46C, a "target name" field 46D and an "initiator name" field 46E.

In the "entry number (#)" field 46A among these fields, the entry number of each entry registered with the volume allocation management table 4 6 is stored. In the "volume name" field 46B, a volume name (for example, LUN) of an online volume VOL corresponding to the entry is stored, and in the "allocated size" field 46C, the capacityof the online volume VOL is stored.

In the "target name" field 46D, an iSCSI target name given to the online volume VOL is stored, and in the "initiator name" field 46E, the iSCSI initiator name of a host apparatus 2 to which the online volume VOL is allocated is stored.

Accordingly, in the example of FIG. 5, it is shown that a 20 GB online volume VOL with a volume name of "Volume 1001" is allocated to a host apparatus 2 with an initiator name of "initiator1001", under a target name of "target1001".

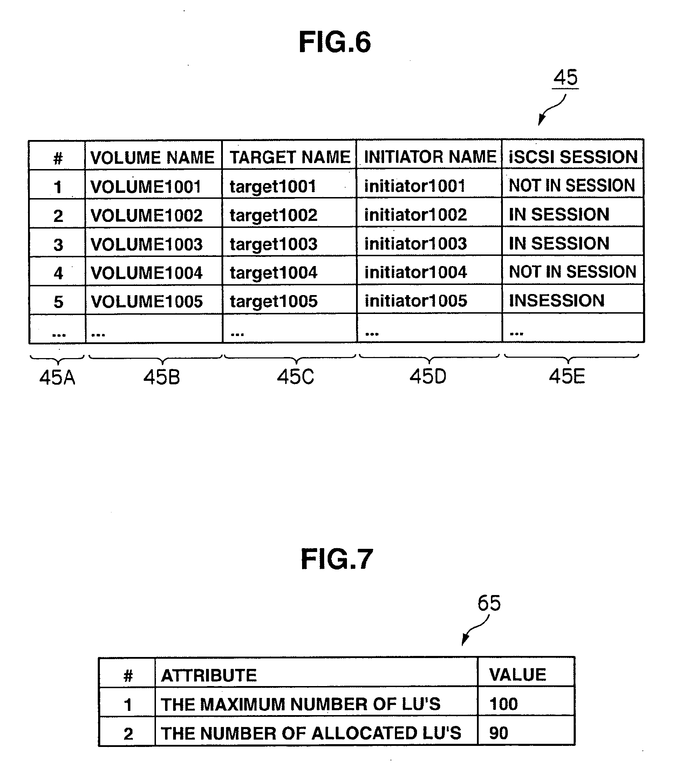

FIG. 6 shows the configuration of the above-described iSCSI session management table 45 stored in the storage unit 40 of the iSCSI controller 32 of the storage apparatus 5. This iSCSI session management table 45 is a table for the processing unit 41 of the iSCSI controller 32 to manage whether or not each host apparatus 2 allocated to an online volume VOL is currently accessing the online volume VOL.

Actually, the iSCSI session management table 45 is composed of an "entry number (#)" field 45A, a "volume name" field 45B, a "target name" field 45C, an "initiator name" field 45D and an "iSCSI session" field 45E.

In each of the "entry number (#)" field 45A, the "volume name" filed 45B, the "target name" field 45C and the "initiator name" field 45D, information similar to the information in the "entry number (#)" field 46A, the "volume name" filed 46B, the "target name" field 46D and the "initiator name" field 46E in the volume allocation management table 46 (FIG. 5) is stored, respectively.

In the "iSCSI session" field 45E, information is stored which indicates whether or not a host apparatus 2 to which an online volume VOL corresponding to the entry is allocated is currently accessing the online volume VOL (whether or not a session is performed between the corresponding initiator and target).

Accordingly, in the example of FIG. 6, it is shown that an online volume VOL with a volume name (LUN) of "volume 1001" is allocated to a host apparatus 2 with an initiator name of "initiator1001", under a target name of "target1001", and the host apparatus 2 is currently not accessing the online volume VOL ("not in session"). Meanwhile, an online volume VOL with a volume name (LUN) of "volume 1002" is allocated to a host apparatus with an initiator name of "initiator1002", under a name of "target1002", and the hose apparatus 2 is currently accessing the online volume VOL ("in session").

FIG. 7 conceptually shows the content of the sizing information 65 stored in the storage unit 60 in the disk controller 34 of the storage apparatus 5. This sizing information 65 is composed of the maximum number of volumes (online volumes VOL and backup volumes BVOL) creatable in the storage apparatus 5 and the number of online volumes VOL already allocated to the host apparatuses 2.

For example, in the example of FIG. 7, it is shown that the maximum number of volumes creatable in the storage apparatus 5 is "100", and each of "90" volumes (online volumes VOL) among them have already been allocated to any host apparatus 2.

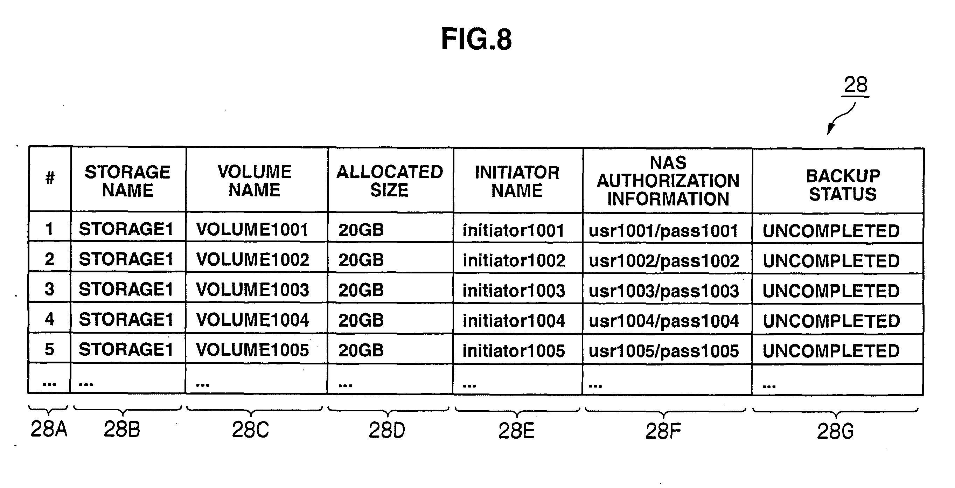

FIG. 8 shows the backup management table 28 stored in the storage unit 22 (FIG. 3) of the management server 3. This backup management table 28 is used for managing backup for each online volume VOL created in the storage apparatus 5, and is composed of an "entry number (#)" field 28A, a "storage name" field 28B, a "volume name" field 28C, an "allocated size" field 28D, an "initiator name" field 28E, an "NAS authorization information" field 28F and a "backup status" field 28G.

In each of the "entry number (#)" field 28A, the "volume name" field 28C, the "allocated size" field 28D and the "initiator name" field 28E from among these fields, data is stored which is similar to the data stored in the corresponding fields 46A to 46C and 46E among the "entry number (#)" field 46A, the "volume name" filed 46B, the "allocated size" field 46C and the "initiator name" field 46E in the volume allocation management table 46 described above with reference to FIG. 5.

In the "storage name" field 28B, the identifier of a corresponding storage apparatus 5 is stored to cope with the case where multiple storage apparatuses 2 exist. Furthermore, in the "NAS authorization information" field 28F, there is stored authorization information about a user who can access a corresponding one of sub-folders 70A to 70n in the backup volume BVOL, which is to be described later (the user's user ID and a password set by the user). For example, FIG. 8 shows an example in which settings are made so that a user with a user ID of "usr1001" can access an online volume with a volume name (LUN) of "volume 1001", with a password of "pass1001".

In the "backup status" field 28G, status information indicating whether or not backup for a corresponding online volume VOL has been completed (hereinafter referred to as a backup status) is stored. In FIG. 8, a backup status of "uncompleted" is stored in the "backup status" field 28G of each entry, and it shows that backup has not been completed yet for any entry.

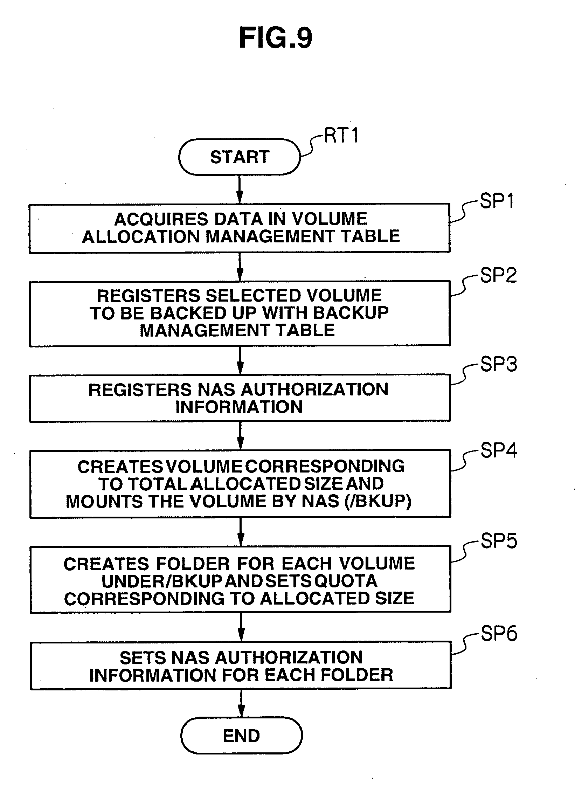

FIG. 9 is a flowchart showing the content of the processing performed by the processing unit 23 (FIG. 3) of the management server 3 in association with the backup function employed in the storage system 1 in this embodiment. The processing unit 23 executes preconfiguration processing for backup, such as selection of online volumes VOL to be backed up and setting of subfolders 70A to 70n of a backup volume BVOL to be the backup destination, in accordance with a first preconfiguration procedure RT1 shown in FIG. 9, based on the backup management program 27 (FIG. 3) stored in the storage unit 22 (FIG. 3).

That is, when an administrator operates the management server 3 to select a preconfiguration procedure mode, the processing unit 23 starts this first preconfiguration procedure RT1, and issues a request to transfer the data in the volume allocation management table 46 (FIG. 5) to the iSCSI controller 32 (FIG. 4) of the storage apparatus 5 (SP1). As a result, the processing unit 41 (FIG. 4) of the iSCSI controller 32 which has received this transfer request sends the data in the volume allocation management table 4 6 held in the storage unit 40 (FIG. 4), which has been described above with reference to FIG. 5, to the management server 3. Thereby, the processing unit acquires the data in the volume allocation management table 46 (SP1).

Subsequently, the processing unit 23 causes a predetermined GUI (graphical user interface) screen for the administrator to select online volumes VOL to be backed up, to be displayed on the output device 21 (SP2). When online volumes VOL to be backed up are selected with the use of this GUI screen, the processing unit 23 registers necessary information about the respective selected online volume VOL with the backup management table 28 described above with reference to FIG. 8 (SP2). Specifically, the processing unit 23 reads, for each of the online volumes VOL selected to be backed up, its volume name, allocated size and iSCSI initiator name from the volume allocation management table 46 acquired at step SP1, and stores each of them in the "volume name" field 28C, the "allocated size" field 28D and the "initiator name" field 28E of the backup management table 28. At this stage, the backup status ("uncompleted") indicating that backup has not been performed is stored in the "backup status" field 28G for each entry in the backup management table 28.

After that, the processing unit 23 stores, for each online volume VOL registered with the backup management table 28, a user ID and a password input by the administrator for each online volume VOL with the use of the above GUI screen and required for a user, who uses the online volume, to access a corresponding one of the subfolders 70A to 70n in the backup volume BVOL, in the "NAS authorization information" field 28F for a corresponding entry in the backup management table 28 (SP3).

After that, the processing unit 23 calculates the summation of the capacities allocated to the online volumes VOL to be backed up, based on the backup management table 28, and sends a volume creation request command to the NAS controller 33 (FIG. 4) of the storage apparatus 5 to the effect that a backup volume BVOL, which is an NAS volume having this capacity, should be created with a path name of "/bkup" (SP4). Then, the processing unit 51 (FIG. 4) of the NAS controller 33 which has received this volume creation request command creates a backup volume BVOL having the specified capacity as a folder with the name of "/bkup", based on the NAS control program 54 (FIG. 4) stored in the storage unit 50 (FIG. 4).

Subsequently, the processing unit 23 sends a subfolder creation request command to the NAS controller 33 (FIG. 4) of the storage apparatus 5 to the effect that subfolders 70A to 70n for the respective online volumes VOL to be backed up, which have been registered with the backup management table 28, should be created in the backup volume BVOL (SP5). In this case, the processing unit 23 sequentially sends initiator names associated with the respective online volumes VOL to be backed up and a quota setting request command to the effect that a quota (capacity limit) corresponding to the allocated size which has been allocated to each of the subfolders 70A to 70n should be set, to the NAS controller 33 of the storage apparatus 5 together with the subfolder creation request command (SP5).

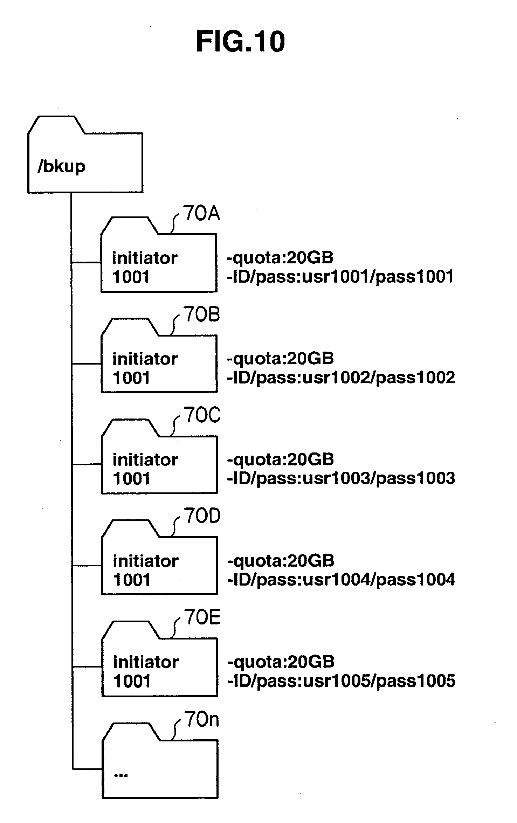

Then, the processing unit 51 (FIG. 4) of the NAS controller 33 which has received the subfolder creation request command and the quota setting request command first creates subfolders 70A to 70n in association with the online volumes VOL, respectively, in the backup volume VOL as shown in FIG. 10, based on the NAS control program 54 (FIG. 4), and gives the specified initiator names to the respective subfolders 70A to 70n. The processing unit 51 of the NAS controller 33 sets a quota of specified capacity for each of the subfolders 70A to 70n. In this way, the subfolders 70A to 70n for the respective online volumes to be backed up are created in the backup volume BVOL (SP5).

After that, the processing unit 23 sends an NAS authorization information setting request command to the NAS controller 33 of the storage apparatus 5 to the effect that, for each of the subfolders 70A to 70n created in the backup volume BVOL, the same user ID and password as those set for a corresponding one of the online volumes VOL to be backed up at step SP3 should be set based on the backup management table 28 (SP6). When this NAS authorization information setting request command is received, the processing unit 51 of the NAS controller 33 sequentially sets the specified user ID's and passwords for the specified subfolders 70A to 70n. Thereby, the NAS authorization information is set for each of the subfolders 70A to 70n created in the backup volume BVOL so that only a corresponding user can access the subfolder, as shown in FIG. 10.

After that, the processing unit 23 ends the sequence of the preconfiguration procedure.

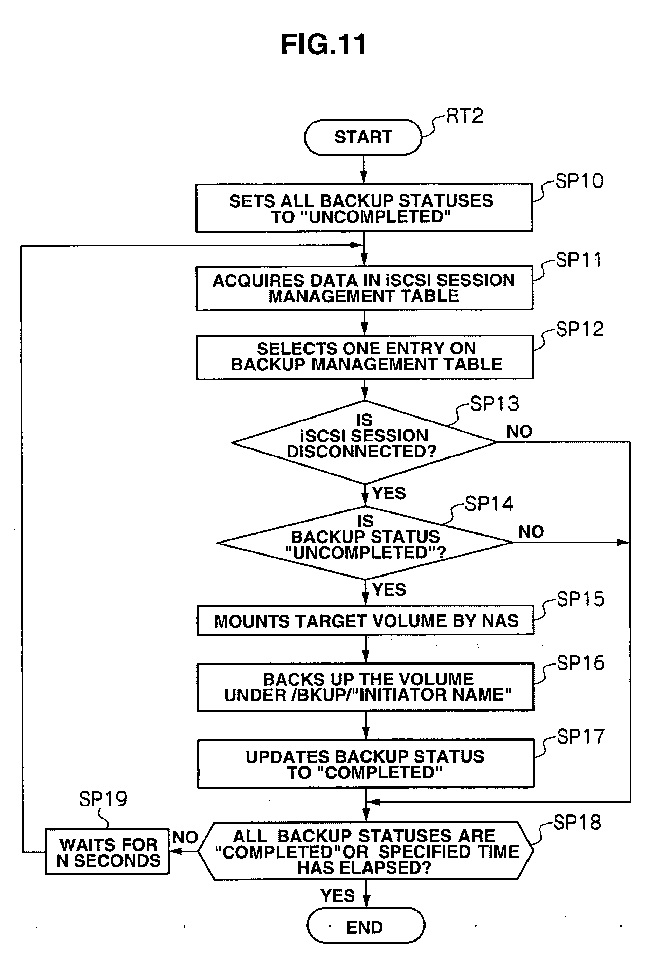

After that, the processing unit 23 of the management server 3 stores backup data for each of the online volumes VOL to be backed up, which have been registered with the backup management table 28, in a corresponding one of the subfolders 70A to 70n in the backup volume BVOL periodically (for example, every day) based on the backup management program 27 (FIG. 3) and in accordance with a first backup procedure RT2 shown in FIG. 11.

That is, the processing unit 23 starts this backup processing, for example, at a predetermined time of a day. It first sets the backup status stored in the "backup status" field 28G (FIG. 8) of each entry in the backup management table 28 held in the storage unit 22 (FIG. 3) to "uncompleted" indicating that backup has not been completed yet (SP10).

Subsequently, the processing unit 23 accesses the iSCSI controller 32 of the storage apparatus 5 and causes it to read the data in the above-described iSCSI session management table 45 (FIG. 6) from the storage unit 40 (FIG. 4) and transfer the data to the management server 3 (SP11). Thereby, the processing unit 23 acquires the data in the iSCSI session management table 45.

Then, the processing unit 23 selects one entry on the backup management table 28 (SP12). After that, it determines whether or not a session from a corresponding host apparatus 2 is disconnected from an online volume VOL corresponding to the entry (whether or not the corresponding host apparatus 2 is accessing the online volume VOL) based on the data in the iSCSI session management table 45, which has been acquired at step SP11 (SP13).

When obtaining a negative result from this determination, the processing unit 23 proceeds to step SP18. On the other hand, when obtaining a positive result, the processing unit 23 determines whether or not the backup status for the entry selected at step SP12 in the backup management table 28 is "uncompleted" (SP14).

When obtaining a negative result from this determination, the processing unit 23 proceeds to step SP18. On the other hand, when obtaining a positive result, the processing unit 23 controls the NAS controller 33 to mount an online volume VOL corresponding to the entry (SP15). After that, the processing unit 23 causes the data in this online volume VOL to be stored in one of the subfolders 70A to 70n in the backup volume BVOL, which corresponds to the online volume (SP16). Thereby, the backup for the online volume VOL is held in a corresponding one of the subfolders 70A to 70n in the backup volume BVOL. After that, the processing unit 23 also controls the NAS controller 33 to unmount this online volume VOL (SP16).

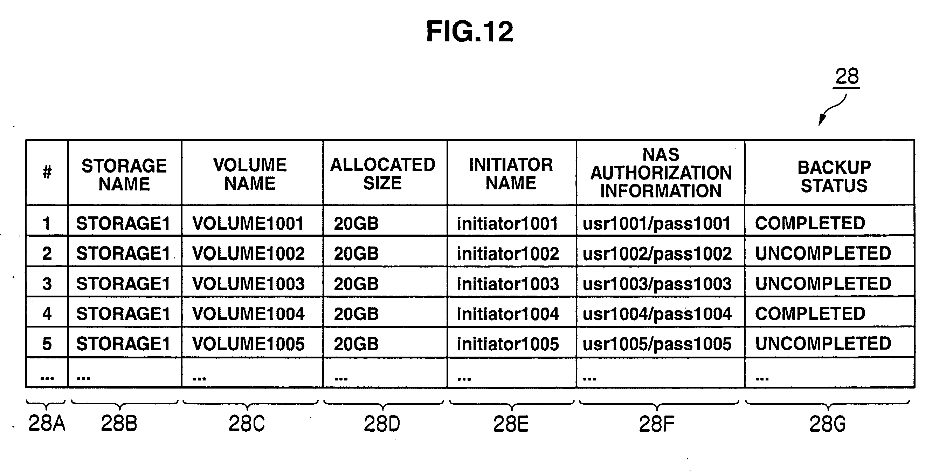

Then, the processing unit 23 updates the backup status for a corresponding entry in the backup management table 28 to "completed" indicating that backup has been completed, as shown in FIG. 12 (SP17). After that, the processing unit 23 determines whether or not the backup statuses for all the entries in the backup management table 28 have become "completed" or a predetermined time-up time has elapsed (SP18) . This time-up time is time set to prevent the backup processing from being performed without being terminated when access (session) from a host apparatus 2 to an online volume VOL is not completed.

If obtaining a negative result from this determination, the processing unit 23 returns to step SP11 after waiting for a predetermined waiting time (n seconds). After that, sequentially selecting a different entry from the backup management table 28 at step SP12, the processing unit 23 repeats the same processing (SP11 to SP19, and then to SP11).

Then, when the backup statuses for all the entries in the backup management table 28 have become "completed" (that is, backup has ended for all the entries) or when a specified time-up time has elapsed, and a positive result from the determination at step SP18 is obtained, the processing unit 23 ends the backup processing.

Thus, in this storage system 1, since backup data for each online volume VOL created in the storage apparatus 5 is stored in one backup volume BVOL, all the volumes that can be created afterward can be used as online volumes VOL to be used by users for reading and writing of data. Therefore, according to this storage system 1, creation of online volumes VOL is not restricted by a backup volume BVOL, and therefore, it is possible to considerably improve the cost performance of the storage apparatus 5.

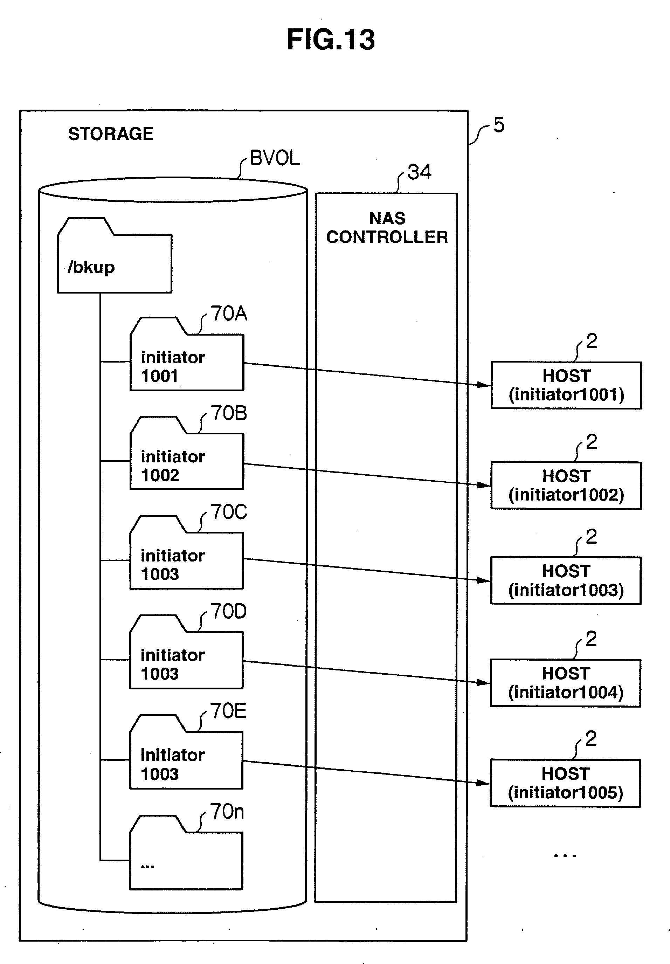

Furthermore, in this storage system 1, to each of subfolders 70A to 70n created in a backup volume VOL by the processing described above, a corresponding user can access using a corresponding host apparatus, through the NAS function of the storage apparatus 5, as shown in FIG. 13. Therefore, according to this storage system 1, it is possible to, when a failure occurs in a corresponding online volume VOL, restore each file or each directory in the online volume VOL.

## (2) Second embodiment

In FIG. 1, reference numerals 80 to 82 denote a storage system, a management server and a storage apparatus according to a second embodiment, respectively. The storage system 80 is constructed so that it can practically sufficiently respond even when the capacity of an NAS volume creatable as a backup volume BVOL in the storage apparatus 82 is restricted. The storage system 80 is arranged similarly to the storage system 1 according to the first embodiment except that multiple backup volumes BVOL can be created in the storage apparatus 82 so that the total capacity is at least the summation of online volumes VOL to be backed up.

That is, this storage system 80 is arranged similarly to the storage system 1 according to the first embodiment except that the content of a backup management program 83 stored in the storage unit 22 of the management server 81 shown in FIG. 3, the content of an NAS control program 85 stored in the storage unit 50 of the NAS controller 33 of the storage apparatus 82 shown in FIG. 4 and the content of sizing information 87 stored in the storage unit 40 of a disk controller 86 of the storage apparatus 82 are different.

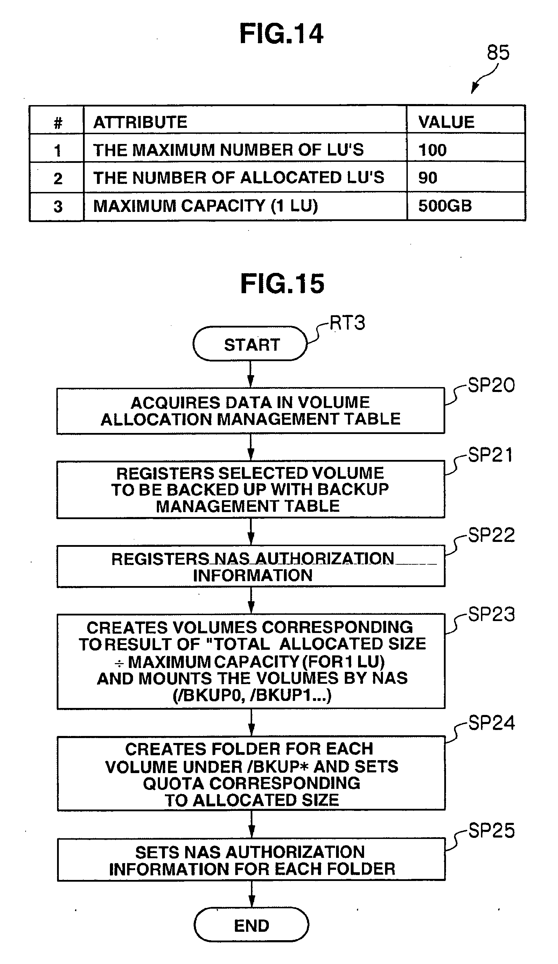

Actually, in the case of the storage system 80 according to the second embodiment, the sizing information 87 is composed of information about the maximum number of LU's indicating the maximum number of volumes creatable in the storage apparatus 82 (one hundred volumes in the example of FIG. 14), information about the number of allocated LU' s indicating the number of volumes already allocated to any host apparatus 2 among the volumes (ninety volumes in the example of FIG. 14) and, additionally, information indicating the maximum capacity of volumes creatable in the storage apparatus 82 (500 GB in the example of FIG. 14) as shown in FIG. 14.

Then, the processing unit 23 of the storage apparatus 81 executes preconfiguration processing for backup, such as selection of online volumes VOL to be backed up and setting of subfolders 70A to 70n of a backup volume BVOL to be the backup destination, in accordance with a second preconfiguration procedure RT3 shown in FIG. 15, based on the sizing information 87 and the backup management program 83.

Specifically, the processing unit 23 performs the processing of steps SP20 to SP22 similarly to the processing of steps SP1 to SP3 of the first preconfiguration procedure RT1 described above with reference to FIG. 9. That is, the processing unit 23 first acquires data in the volume allocation management table 46 (FIG. 4), from the storage apparatus 82 (SP20). Then, referring to this volume allocation management table 46, the processing unit 23 registers necessary information about each of online volumes VOL to be backed up, which have been selected by an administrator, with the backup management table 28 described above with reference to FIG. 8 (SP21). After that, the processing unit 23 stores a corresponding user ID and a corresponding password in the "NAS authorization information" field 28F for each entry in the backup management table 28 (SP22).

Subsequently, the processing unit 23 calculates the number of backup volumes BVOL to be created by dividing the total capacity of the sizes allocated to the respective online volumes VOL to be backed up by the maximum capacity of a volume creatable in the storage apparatus 82 (SP23) based on the backup management table 28. For example, if there are one hundred online volumes VOL to be backed up, a capacity of 20 GB is allocated to each of them, and the maximum capacity possible in the storage apparatus 82 is 500 GB, then it is calculated that four backup volumes BVOL are required, as shown in [Formula 1] below.

$$20 \times 100 \div 500 = 4 \quad \dots \quad (1)$$

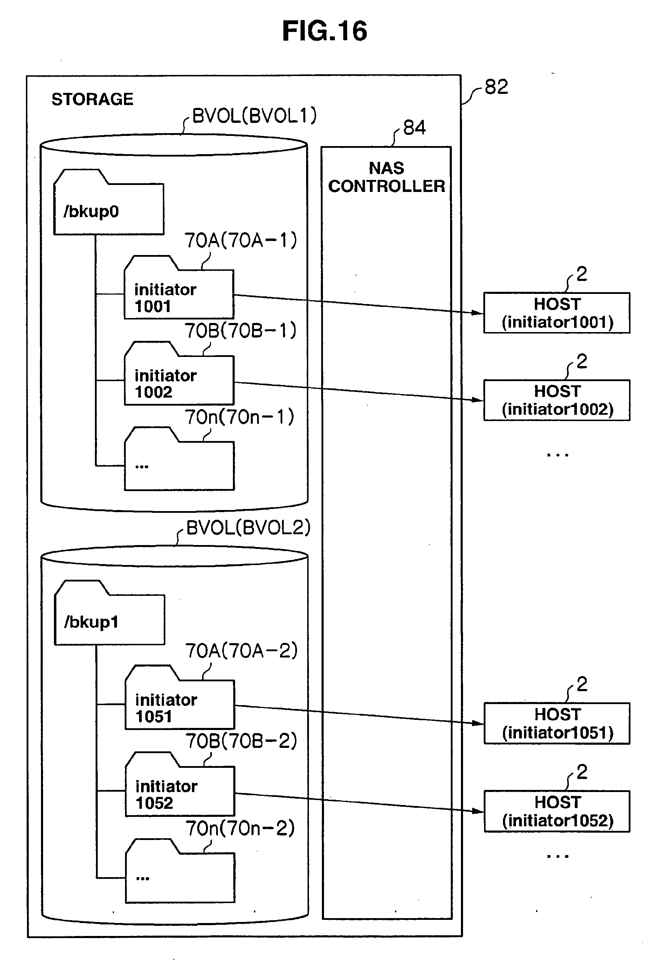

Then, the processing unit 23 sends a volume creation request command to an NAS controller 84 of the storage apparatus 82 to the effect that the calculated number of backup volumes BVOL each of which has the maximum capacity possible in the storage apparatus 82 should be created, giving them a path name of "/bkupN (N=0, 1, 2, ...)". The processing unit 51 (FIG. 4) of the NAS controller 84 which has received this volume creation request creates the specified number of backup volumes BVOL (BVOL1 and BVOL2) each of which has the possible maximum capacity, giving them the folder name of "/bkup N (N=0, 1, °2, ...)" based on the NAS control program 85 stored in the storage unit 50, as shown in FIG. 16.

Subsequently, the processing unit 23 sends a subfolder creation request command to the NAS controller 84 of the storage apparatus 82 to the effect that subfolders 70A to 70n (70A-1 to 70n-1 and 70A-2 to 70n-2) for the respective online volumes VOL to be backed up, which have been registered with the backup management table 28, should be created in a corresponding backup volume BVOL. In this case, the processing unit 23 sequentially sends initiator names associated with the respective online volumes VOL to be backed up and a quota setting request command to the effect that a quota (capacity limit) corresponding to the allocated size which has been allocated to each of the subfolders 70A to 70n should be set, together with the subfolder creation request command, to the NAS controller 84 of the storage apparatus 82.

The processing unit 51 (FIG. 4) of the NAS controller 84 which has received the subfolder creation request command and the quota setting request command first creates subfolders 70A to 70n associated with the respective online volumes VOL to be backed up, in each backup volume BVOL by dispersing the subfolders so that they are not overlapped, and gives the specified initiator names to the subfolders 70A to 70n based on the NAS control program 85 (FIG. 4), as shown in FIG. 16. The processing unit 51 also sets a quota of a specified capacity for each of the subfolders 70A to 70n. In this way, the processing unit 23 of the storage apparatus 81 divides each backup volume BVOL into partitions for respective online volumes VOL to be backed up.

After that, the processing unit 23 sets NAS authorization information for each of the subfolders 70A to 70n similarly to step SP6 of the first preconfiguration procedure RT1 described above with reference to FIG. 9 (SP25), and then ends the sequence of the preconfiguration processing.

As described above, in this storage system 80, backup data for respective online volumes VOL created in the storage apparatus 82 is dispersed and stored in multiple NAS volumes. Accordingly, in addition to the effect obtained by the storage system 1 according to the first embodiment, it is also possible to obtain an effect of capable of practically sufficiently responding even when the capacity of an NAS volume creatable in the storage apparatus 82 is restricted.

(3) Third embodiment

In FIG. 1, reference numerals 90 to 92 denote a storage system, a management server and a storage apparatus according to a third embodiment, respectively. The storage system 90 is arranged similarly to the storage system 1 according to the first embodiment except that, when backup processing is performed for data in an online volume VOL to be backed up, virus check processing for checking whether or not the data is infected by a virus is also executed.

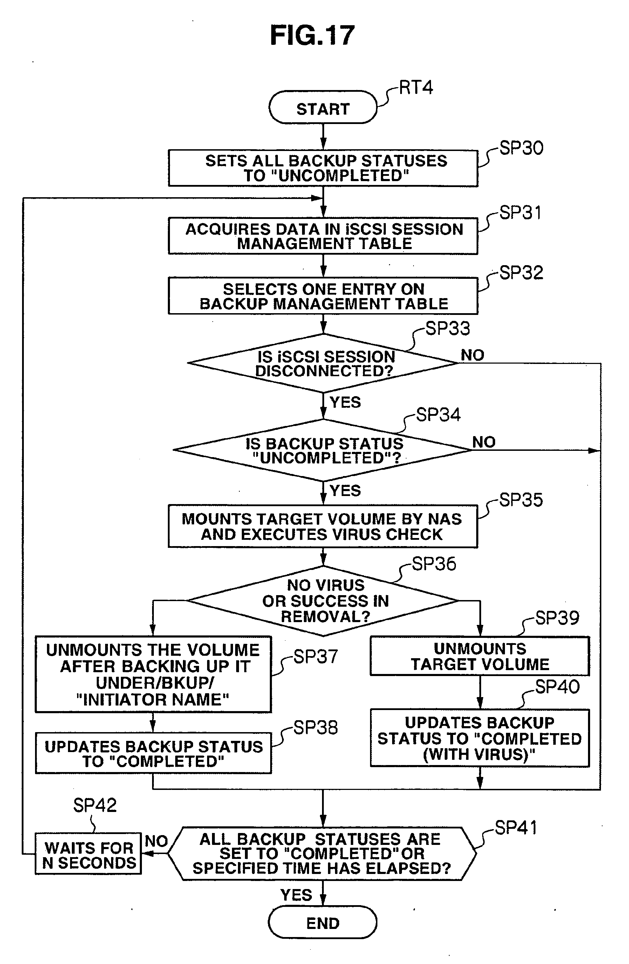

Actually, the processing unit 23 (FIG. 3) of a management server 91 stores backup data for each of the online volumes VOL to be backed up, which have been registered with the backup management table 28, in a corresponding one of the subfolders 70A to 70n in the backup volume BVOL periodically (for example, every day) in accordance with a second backup procedure RT4 shown in FIG. 17, based on a backup management program 93 stored in the storage unit 22, and in this case, it also executes virus check processing for the backup data.

That is, the processing unit 23 periodically starts this backup processing and performs the processing of steps SP30 to SP32 similarly to the processing of steps SP10 to SP12 of the first backup procedure RT2 described above with reference to FIG. 11.

After that, the processing unit 23 determines whether or not a session from a corresponding host apparatus 2 is currently disconnected from the online volume VOL corresponding to the entry selected at step S32, based on the data in the iSCSI session management table 45, which has been acquired at step SP31 (SP33).

When obtaining a negative result from this determination, the processing unit 23 proceeds to step SP41. On the other hand, when obtaining a positive result, the processing unit 23 determines whether or not the backup status for the entry selected at step SP12 in the backup management table 28 is "uncompleted" (SP34).

When obtaining a negative result from this determination, the processing unit 23 proceeds to step SP18. On the other hand, when obtaining a positive result, the processing unit 23 sends a mount request command in which the online volume VOL is specified, to an NAS controller 94 (SP35).

The processing unit 51 (FIG. 4) of the NAS controller 94 which has received this mount request command mounts the online volume VOL corresponding to the entry, and then executes virus check processing for the data in the mounted online volume VOL in accordance with a virus check program (not shown) stored in the storage unit 50 (FIG. 4). In this case, if detecting a virus, the processing unit 51 of the NAS controller 94 executes processing for removing the virus. The processing unit 51 of the NAS controller 94 notifies the result of the virus check processing (whether or not a virus has been detected, and the result of the removal processing performed in the case of detecting a virus) to the management server 91 (hereinafter, the notification is referred to as virus check result notification).

After that, the processing unit 23 of the management server 91 determines whether or not a virus was not detected in the virus check processing performed at step SP35 or a virus was detected but successfully removed (SP36) based on the virus check result notification from the storage apparatus 92.

To obtain a positive result from this determination means that a virus was not detected or a virus was detected but successfully removed. In this case, the processing unit 23 performs the processing of steps SP37 to SP42 similarly to the processing of steps SP16 to SP19 of the first backup procedure RT2 (FIG. 11) described above.

On the other hand, to obtain a negative result from the determination at step SP36 means that a virus was detected but could not be removed. In this case, the processing unit 23 controls the NAS controller 94 of the storage apparatus 92 to unmount the online volume VOL targeted then (SP39).

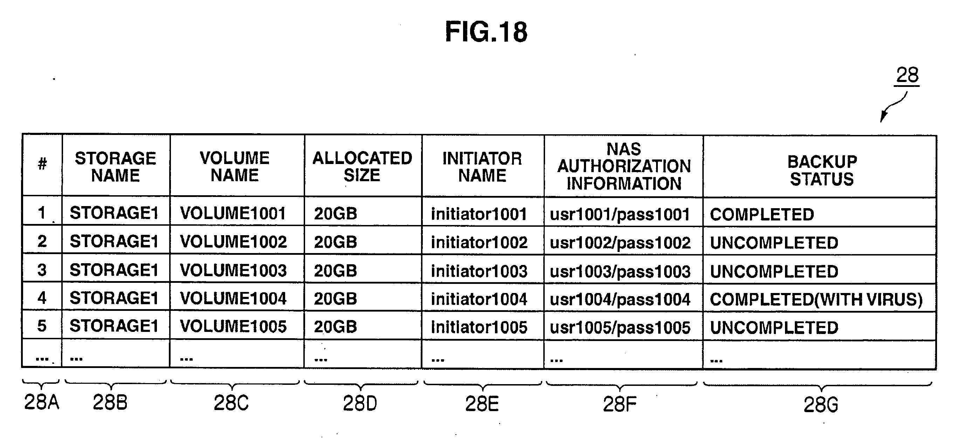

After that, the processing unit 23 updates the backup status of the corresponding entry in the backup management table 28 (FIG. 12) to "completed (with virus) " indicating that backup processing for the online volume VOL has been completed, though backup has not been performed because of existence of a virus, as shown in FIG. 18 (SP40).

After that, the processing unit 23 determines whether or not the backup status for all the entries in the backup management table 28 has become "completed" ("completed (with virus) ") or a predetermined time-up time has elapsed (SP41). If obtaining a negative result, then the processing unit 23 returns to step SP31 after waiting for a predetermined waiting time (n seconds) (SP42). After that, sequentially selecting a different entry from the backup management table 28 at step SP32, the processing unit 23 repeats the same processing (SP31 to SP42, and then to SP31).

Then, when the backup status for all the entries in the backup management table 28 has become "completed" (that is, backup has ended for all the entries) or when the specified time-up time has elapsed, and a positive result is obtained from the determination at step SP41, the processing unit 23 ends the backup processing.

As described above, in this storage system 90, when each online volume VOL created in the storage apparatus 92 is backed up, virus check for data in the online volume VOL is also performed, and the data in the online volume VOL is not backed up when the data is infected by a virus. Therefore, it is possible to certainly and effectively prevent backup data for the other online volumes VOL stored in the backup volume BVOL from being infected by the virus.

Furthermore, in this storage system 90, if data in an online volume VOL to be backed up is infected by a virus, the data is not backed up, as described above; and therefore, the data before it was infected by the virus can be held in a corresponding one of subfolders 70A to 70n in the backup volume BVOL. For example, restoration of the virus-infected data in the online volume VOL can be performed with the use of this backup data which is not infected by the virus.

(4) Other embodiments

In the above first to third embodiments, description has been made on the case where the NAS controller 33, 84 or 94 and volumes (online volumes VOL and backup volumes BVOL) are provided in the same one storage apparatus 5, 82 or 92. However, the present invention is not limited thereto. The present invention can be applied to a case where the NAS controller 33, 84 or 94 and the volumes are provided in different storage apparatuses.

Furthermore, in the embodiments described above, description has been made on the case where the same number of subfolders 70A to 70n as online volumes VOL is created in a backup volume BVOL (a case where a backup volume BVOL is divided into the same number of partitions as online volumes VOL). However, the present invention is not limited thereto. It is also possible to create more subfolders 70A to 70n than online volumes VOL in a backup volume BVOL in advance in consideration of increase in the number of online volumes VOL.

Furthermore, in the above first to third embodiments, description has been made on the case where a backup volume having the total capacity corresponding to the summation of capacities of online volumes is created; at least the same number of subfolders 70A to 70n as the online volumes is created in the storage area of the created backup volume; and a control unit for storing backup data for each online volume in a corresponding one of subfolders 70A to 70n is composed of the management server 3, 81 or 91 and the storage controller 30 of the storage apparatus 5, 82 or 92. However, the present invention is not limited thereto. All the functions of the control unit may be provided in the storage apparatus 5, 82 or 92. Specifically, the backup management program 27, 83 or 93 and the backup management table 28 are provided in the storage apparatus 5, 82 or 92, and the storage apparatus 5, 82 or 92 is constructed to self-containedly perform the backup processing for itself based on the backup management program 27, 83 or 93 and the backup management table 28.

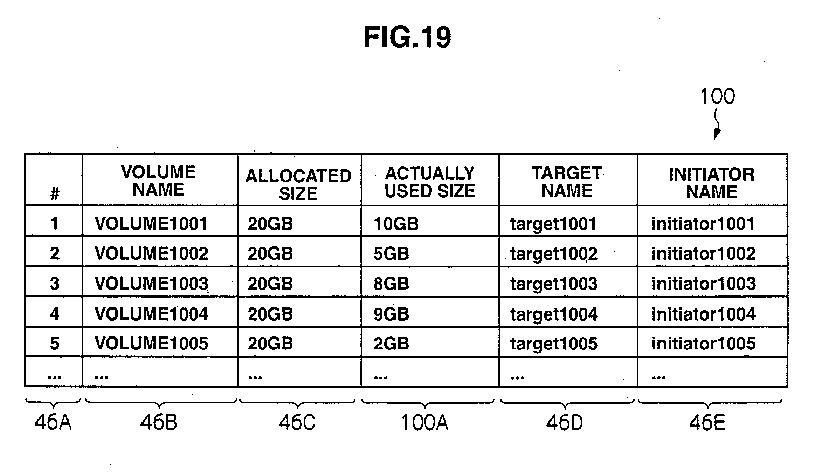

Furthermore, in the embodiment described above, description has been made on the case where an online volume is a volume with a fixed capacity. However, the present invention is not limited thereto. For example, the present invention can be applied to the case where an online volume VOL is a volume the capacity of which is increased depending on the amount of data written by a user as disclosed in JP-A-2003-015915. In this case, an "actually used size" field 100A is provided in a volume allocation management table 100 as shown in FIG. 19, for example. The capacity currently allocated to the online volume VOL (hereinafter referred to as an actually used size) is stored in this "actually used size" field 100A to manage the actually used size for each online volume VOL. When the actually used size changes (increases), the setting of the quota set for a corresponding one of subfolders 70A to 70n is changed.

The present invention can be applied to various storage apparatuses.

**Claims**

1. A backup apparatus for backing up each of data in one or more online volumes to be backed up which have been created in a storage apparatus, comprising:

a control unit for creating a backup volume having a capacity corresponding to at least the summation of the capacities of the online volumes, dividing the storage area of the created backup volume into at least the same number of partitions as the online volumes, and storing backup data for each of the online volumes in a corresponding one of the partitions.

2. The backup apparatus according to claim 1, wherein the control unit sets, for each of the partitions, a capacity limit corresponding to the capacity allocated to a corresponding one of the online volumes.

3. The backup apparatus according to claim 2, wherein if the online volume is a volume the capacity of which is increased according to the amount of data written by a user, the control unit changes the setting of the capacity limit of a corresponding one of the partitions based on change in the capacity of the online volume.

4. The backup apparatus according to any one of claims 1 to 3, wherein the control unit creates the backup volume as a folder to be accessed from outside, divides the backup volume into at least the same number of the partitions as the online volumes so that subfolders corresponding to the respective online volumes are created in the folder, and stores the backup data for each of the online volumes in a corresponding one of the subfolders.

5. The backup apparatus according to any one of claims 1 to 4, wherein the control unit sets predetermined authorization information for each of the partitions to enable only a corresponding user to access the partition.

6. The backup apparatus according to any one of claims 1 to 5, wherein when a session from outside to the online volumes is disconnected, the control unit stores each of the backup data for the online volumes in a corresponding one of the partitions .

7. The backup apparatus according to any one of claims 1 to 6, wherein the control unit creates a plurality of the backup volumes so that the total capacity is at least the summation of the capacities of the online volumes.

8. The backup apparatus according to any one of claims 1 to 7, wherein when storing the backup data for each of the online volumes in a corresponding partition, the control unit executes virus check processing for checking whether or not the data stored in the online volume is infected by a virus.

9. The backup apparatus according to claim 8, wherein when it is detected by the virus check processing that the data in the online volume is infected by the virus, the control unit executes predetermined removal processing for removing the virus for the data in the online volume.

10. A backup method for backing up each of data in one or more online volumes to be backed up which have been created in a storage apparatus, comprising:

a first step of creating a backup volume having a capacity corresponding to at least the summation of the capacities of the online volumes, and dividing the storage area of the created backup volume into at least the same number of partitions as the online volumes; and

a second step of storing backup data for each of the online volumes in a corresponding one of the partitions.

11. The backup method according to claim 10, wherein the first step includes setting, for each of the partitions, a capacity limit corresponding to the capacity allocated to a corresponding one of the online volumes.

12. The backup method according to claim 11, wherein if the online volume is a volume the capacity of which is increased according to the amount of data written by a user, the setting of the capacity limit of a corresponding one of the partitions is changed based on change in the capacity of the online volume.

13. The backup method according to any one of claims 10 to 12, wherein
the first step includes creating the backup volume as a folder to be accessed from outside, and divides the backup volume into at least the same number of partitions as the online volumes so that subfolders corresponding to the respective online volumes are created in the folder; and
the second step includes storing readable backup data for each of the online volumes in a corresponding one of the subfolders.

14. The backup method according to any one of claims 10 to 13, wherein
the first step includes setting predetermined authorization information for each of the partitions to enable only a corresponding user to access each partition.

15. The backup method according to any one of claims 10 to 14, wherein
when a session from outside to the online volumes is disconnected, the second step includes storing each of the backup data for the online volumes in a corresponding one of the partitions.

16. The backup method according to any one of claims 10 to 15, wherein
the first step includes creating a plurality of the backup volumes so that the total capacity is at least the summation of the capacities of the online volumes.

17. The backup method according to any one of claims 10 to 16, wherein
when storing the backup data for each of the online volumes in a corresponding partition, the second step includes executing virus check processing for checking whether or not the data stored in the online volume is infected by a virus.

18. The backup method according to claim 17, wherein when it is detected by the virus check processing that the data in the online volume is infected by the virus, predetermined removal processing for removing the virus is executed for the data in the online volume.

# FIG.1

1(80, 90)

2      2      3(81, 91)

HOST APPARATUS

HOST APPARATUS

MANAGEMENT SERVER

iSCSI SESSION INFORMATION

iSCSI

BACKUP INSTRUCTION

4

32   iSCSI CONTROLLER

ONLINE VOL   VOL

ONLINE VOL   VOL

VOL

NAS CONTROLLER

33(84, 94)

/bkup/1001   70A
/bkup/1002   70B

/bkup/N   70n

STORAGE APPARATUS

5(82, 92)

# FIG.2

EP 1 837 765 A2

# FIG.3

EP 1 837 765 A2

# FIG.4

**NETWORK** 4

32

**iSCSI CONTROLLER** 43

40 STORAGE UNIT

41 PROCESSING UNIT

PORT 42

33(84, 94)    30    5(82, 92)

53    **NAS CONTROLLER**

PORT 52

PROCESSING UNIT 51

STORAGE UNIT 50

60 STORAGE UNIT

63

61 PROCESSING UNIT

62 STORAGE CONNECTION DEVICE

**DISK CONTROLLER**

34(86)

44 — iSCSI CONTROL PROGRAM

45 — iSCSI SESSION MANAGEMENT TABLE

46 — VOLUME ALLOCATION MANAGEMENT TABLE

64 — STORAGE CONTROL DEVICE

65 (87) — SIZING INFORMATION

VOL

31

31A

NAS CONTROL PROGRAM

54(85, 95)

**STORAGE APPARATUS**

EP 1 837 765 A2

# FIG.5

46

| # | VOLUME NAME | ALLOCATED SIZE | TARGET NAME | INITIATOR NAME |
|---|---|---|---|---|
| 1 | VOLUME1001 | 20GB | target1001 | initiator1001 |
| 2 | VOLUME1002 | 20GB | target1002 | initiator1002 |
| 3 | VOLUME1003 | 20GB | target1003 | initiator1003 |
| 4 | VOLUME1004 | 20GB | target1004 | initiator1004 |
| 5 | VOLUME1005 | 20GB | target1005 | initiator1005 |
| ... | ... | ... | ... | ... |

46A    46B    46C    46D    46E

# FIG.6

45

| # | VOLUME NAME | TARGET NAME | INITIATOR NAME | iSCSI SESSION |
|---|---|---|---|---|
| 1 | VOLUME1001 | target1001 | initiator1001 | NOT IN SESSION |
| 2 | VOLUME1002 | target1002 | initiator1002 | IN SESSION |
| 3 | VOLUME1003 | target1003 | initiator1003 | IN SESSION |
| 4 | VOLUME1004 | target1004 | initiator1004 | NOT IN SESSION |
| 5 | VOLUME1005 | target1005 | initiator1005 | INSESSION |
| ... | ... | ... | ... | ... |

45A     45B     45C     45D     45E

# FIG.7

65

| # | ATTRIBUTE | VALUE |
|---|---|---|
| 1 | THE MAXIMUM NUMBER OF LU'S | 100 |
| 2 | THE NUMBER OF ALLOCATED LU'S | 90 |

# FIG.8

EP 1 837 765 A2

_28_

| # | STORAGE NAME | VOLUME NAME | ALLOCATED SIZE | INITIATOR NAME | NAS AUTHORIZATION INFORMATION | BACKUP STATUS |
|---|---|---|---|---|---|---|
| 1 | STORAGE1 | VOLUME1001 | 20GB | initiator1001 | usr1001/pass1001 | UNCOMPLETED |
| 2 | STORAGE1 | VOLUME1002 | 20GB | initiator1002 | usr1002/pass1002 | UNCOMPLETED |
| 3 | STORAGE1 | VOLUME1003 | 20GB | initiator1003 | usr1003/pass1003 | UNCOMPLETED |
| 4 | STORAGE1 | VOLUME1004 | 20GB | initiator1004 | usr1004/pass1004 | UNCOMPLETED |
| 5 | STORAGE1 | VOLUME1005 | 20GB | initiator1005 | usr1005/pass1005 | UNCOMPLETED |
| ... | ... | ... | ... | ... | ... | ... |

28A  28B  28C  28D  28E  28F  28G

# FIG.9

```
                    ┌─RT1
            ( START )
                │
┌───────────────────────────────┐  ┌─SP1
│   ACQUIRES DATA IN VOLUME      │
│ ALLOCATION MANAGEMENT TABLE    │
└───────────────────────────────┘
                │
┌───────────────────────────────┐  ┌─SP2
│   REGISTERS SELECTED VOLUME    │
│  TO BE BACKED UP WITH BACKUP   │
│       MANAGEMENT TABLE         │
└───────────────────────────────┘
                │
┌───────────────────────────────┐  ┌─SP3
│   REGISTERS NAS AUTHORIZATION  │
│          INFORMATION           │
└───────────────────────────────┘
                │
┌───────────────────────────────┐  ┌─SP4
│  CREATES VOLUME CORRESPONDING  │
│    TO TOTAL ALLOCATED SIZE AND │
│ MOUNTS THE VOLUME BY NAS (/BKUP)│
└───────────────────────────────┘
                │
┌───────────────────────────────┐  ┌─SP5
│  CREATES FOLDER FOR EACH VOLUME│
│    UNDER/BKUP AND SETS QUOTA   │
│ CORRESPONDING TO ALLOCATED SIZE│
└───────────────────────────────┘
                │
┌───────────────────────────────┐  ┌─SP6
│   SETS NAS AUTHORIZATION       │
│  INFORMATION FOR EACH FOLDER   │
└───────────────────────────────┘
                │
            ( END )
```

# FIG.10

/bkup

70A
initiator
1001
-quota:20GB
-ID/pass:usr1001/pass1001

70B
initiator
1001
-quota:20GB
-ID/pass:usr1002/pass1002

70C
initiator
1001
-quota:20GB
-ID/pass:usr1003/pass1003

70D
initiator
1001
-quota:20GB
-ID/pass:usr1004/pass1004

70E
initiator
1001
-quota:20GB
-ID/pass:usr1005/pass1005

70n
...

# FIG.11

START — RT2

SETS ALL BACKUP STATUSES
TO "UNCOMPLETED" — SP10

ACQUIRES DATA IN iSCSI SESSION
MANAGEMENT TABLE — SP11

SELECTS ONE ENTRY ON
BACKUP MANAGEMENT TABLE — SP12

IS
iSCSI SESSION
DISCONNECTED? — SP13    NO

YES

IS
BACKUP STATUS
"UNCOMPLETED"? — SP14    NO

YES

MOUNTS TARGET VOLUME BY NAS — SP15

BACKS UP THE VOLUME
UNDER /BKUP/"INITIATOR NAME" — SP16

UPDATES BACKUP STATUS
TO "COMPLETED" — SP17

SP19

WAITS FOR
N SECONDS    NO    ALL BACKUP STATUSES ARE
"COMPLETED" OR SPECIFIED TIME
HAS ELAPSED? — SP18

YES

END

# FIG.12

<u>28</u>

| # | STORAGE NAME | VOLUME NAME | ALLOCATED SIZE | INITIATOR NAME | NAS AUTHORIZATION INFORMATION | BACKUP STATUS |
|---|---|---|---|---|---|---|
| 1 | STORAGE1 | VOLUME1001 | 20GB | initiator1001 | usr1001/pass1001 | COMPLETED |
| 2 | STORAGE1 | VOLUME1002 | 20GB | initiator1002 | usr1002/pass1002 | UNCOMPLETED |
| 3 | STORAGE1 | VOLUME1003 | 20GB | initiator1003 | usr1003/pass1003 | UNCOMPLETED |
| 4 | STORAGE1 | VOLUME1004 | 20GB | initiator1004 | usr1004/pass1004 | COMPLETED |
| 5 | STORAGE1 | VOLUME1005 | 20GB | initiator1005 | usr1005/pass1005 | UNCOMPLETED |
| ... | ... | ... | ... | ... | ... | ... |

28A  28B  28C  28D  28E  28F  28G

EP 1 837 765 A2

# FIG.13

# FIG.14

85

| # | ATTRIBUTE | VALUE |
|---|-----------|-------|
| 1 | THE MAXIMUM NUMBER OF LU'S | 100 |
| 2 | THE NUMBER OF ALLOCATED LU'S | 90 |
| 3 | MAXIMUM CAPACITY (1 LU) | 500GB |

# FIG.15

START — RT3

ACQUIRES DATA IN VOLUME ALLOCATION MANAGEMENT TABLE — SP20

REGISTERS SELECTED VOLUME TO BE BACKED UP WITH BACKUP MANAGEMENT TABLE — SP21

REGISTERS NAS AUTHORIZATION INFORMATION — SP22

CREATES VOLUMES CORRESPONDING TO RESULT OF "TOTAL ALLOCATED SIZE ÷ MAXIMUM CAPACITY (FOR 1 LU) AND MOUNTS THE VOLUMES BY NAS (/BKUP0, /BKUP1...) — SP23

CREATES FOLDER FOR EACH VOLUME UNDER /BKUP* AND SETS QUOTA CORRESPONDING TO ALLOCATED SIZE — SP24

SETS NAS AUTHORIZATION INFORMATION FOR EACH FOLDER — SP25

END

# FIG.16

# FIG.17

START ──RT4

↓

SETS ALL BACKUP STATUSES
TO "UNCOMPLETED" ──SP30

↓

ACQUIRES DATA IN iSCSI SESSION
MANAGEMENT TABLE ──SP31

↓

SELECTS ONE ENTRY ON
BACKUP MANAGEMENT TABLE ──SP32

↓

IS iSCSI SESSION
DISCONNECTED? ──SP33 ──NO──→

↓ YES

IS BACKUP STATUS
"UNCOMPLETED"? ──SP34 ──NO──→

↓ YES

MOUNTS TARGET VOLUME BY NAS
AND EXECUTES VIRUS CHECK ──SP35

↓

NO VIRUS
OR SUCCESS IN
REMOVAL? ──SP36

| UNMOUNTS THE VOLUME AFTER BACKING UP IT UNDER/BKUP/ "INITIATOR NAME" ──SP37 | UNMOUNTS TARGET VOLUME ──SP39 |
| UPDATES BACKUP STATUS TO "COMPLETED" ──SP38 | UPDATES BACKUP STATUS TO "COMPLETED (WITH VIRUS)" ──SP40 |

SP42
WAITS FOR
N SECONDS ←──NO── ALL BACKUP STATUSES ARE
SET TO "COMPLETED"OR
SPECIFIED TIME HAS ELAPSED? ──SP41

↓ YES

END

26

# FIG.18

EP 1 837 765 A2

| # | STORAGE NAME | VOLUME NAME | ALLOCATED SIZE | INITIATOR NAME | NAS AUTHORIZATION INFORMATION | BACKUP STATUS |
|---|---|---|---|---|---|---|
| 1 | STORAGE1 | VOLUME1001 | 20GB | initiator1001 | usr1001/pass1001 | COMPLETED |
| 2 | STORAGE1 | VOLUME1002 | 20GB | initiator1002 | usr1002/pass1002 | UNCOMPLETED |
| 3 | STORAGE1 | VOLUME1003 | 20GB | initiator1003 | usr1003/pass1003 | UNCOMPLETED |
| 4 | STORAGE1 | VOLUME1004 | 20GB | initiator1004 | usr1004/pass1004 | COMPLETED(WITH VIRUS) |
| 5 | STORAGE1 | VOLUME1005 | 20GB | Initiator1005 | usr1005/pass1005 | UNCOMPLETED |
| ... | ... | ... | ... | ... | ... | ... |

28A    28B    28C    28D    28E    28F    28G

28

# FIG.19

| # | VOLUME NAME | ALLOCATED SIZE | ACTUALLY USED SIZE | TARGET NAME | INITIATOR NAME |
|---|---|---|---|---|---|
| 1 | VOLUME1001 | 20GB | 10GB | target1001 | initiator1001 |
| 2 | VOLUME1002 | 20GB | 5GB | target1002 | initiator1002 |
| 3 | VOLUME1003 | 20GB | 8GB | target1003 | initiator1003 |
| 4 | VOLUME1004 | 20GB | 9GB | target1004 | initiator1004 |
| 5 | VOLUME1005 | 20GB | 2GB | target1005 | initiator1005 |
| ... | ... | ... | ... | ... | ... |

46A    46B    46C    100A    46D    46E

EP 1 837 765 A2

**EP 1 837 765 A2**

## REFERENCES CITED IN THE DESCRIPTION

### Patent documents cited in the description

- JP 2006036372 A
- JP 2004192133 A
- JP 2003015915 A